Europäisches Patentamt

European Patent Office

Office européen des brevets

(19)

(11) Veröffentlichungsnummer: **0 381 825**

**A1**

(12) **EUROPÄISCHE PATENTANMELDUNG**

(21) Anmeldenummer: **89121650.9**

(22) Anmeldetag: **23.11.89**

(51) Int. Cl.5: **C01B 21/26**

(30) Priorität: **07.02.89 DE 3903571**

(43) Veröffentlichungstag der Anmeldung:
**16.08.90 Patentblatt 90/33**

(84) Benannte Vertragsstaaten:
**AT BE CH DE ES FR GB GR IT LI LU NL SE**

(71) Anmelder: **Uhde GmbH**
**Friedrich-Uhde-Strasse 15**
**D-4600 Dortmund 1(DE)**

(72) Erfinder: **Wiegand, Karl Wilhelm, Dr.**
**Weisse Taube 11**
**D-4600 Dortmund 50(DE)**
Erfinder: **Thiemann, Michael, Dr.**
**Meininghausstrasse 12**
**D-4600 Dortmund 1(DE)**
Erfinder: **Scheibler, Erich**
**Sindernweg 38**
**D-4600 Dortmund 30(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) **Verfahren zur Erzeugung mechanischer Energie bei der NH3-Oxidation im HNO3-Prozess.**

(57) Bei der $NH_3$-Oxidation im $HNO_3$-Prozeß, bei der $NH_3$ durch Verbrennung zu $NO_x$-Gasen umgesetzt wird, soll die im Prozeß erzeugte Wärmeenergie besser ausgenutzt werden, wobei insbesondere die Wärmeenergie der $NO_x$-Gase auf niedrigerem Temperaturniveau ausgenutzt werden soll.

Dies wird dadurch erreicht, daß in einem separaten Kreisprozeß flüssiges $NH_3$ mittels der Prozeßwärme der erzeugten $NO_x$-Gase verdampft und überhitzt wird, daß dann das überhitzte $NH_3$ in einer Turbine energieerzeugend entspannt wird und daß anschließend das flüssige $NH_3$ auf einen höheren Druck gebracht und nachfolgend wiederum verdampft und überhitzt wird.

## Verfahren zur Erzeugung mechanischer Energie bei der NH$_3$-Oxidation im HNO$_3$-Prozeß

Die Erfindung richtet sich auf ein Verfahren zur Erzeugung mechanischer Energie bei der NH$_3$-Oxidation im HNO$_3$-Prozeß, bei dem NH$_3$ durch Verbrennung zu NO$_x$-Gasen umgesetzt wird.

Bei bekannten Verfahren zur Herstellung von Salpetersäure erfolgt die Oxidation von NH$_3$ zu NO$_x$-Gasen üblicherweise im Temperaturbereich zwischen 800 - 970°C. Die sich an die Oxidation anschließende Absorption der NO$_x$-Gase mit Wasser zu HNO$_3$ wird dagegen aus reaktionstechnischen Gründen bei wesentlich niedrigeren Temperaturen durchgeführt. Es ist deshalb notwendig, den NO$_x$-Gasstrom vor der Absorption abzukühlen.

Diese Abkühlung wird bei bekannten Verfahren in mehreren Schritten durchgeführt, wobei zunächst auf hohem Temperaturniveau der NO$_x$-Gase eine Kühlung mit Nutzung der Prozeßwärme erfolgt. So ist üblicherweise direkt an den Brenner ein Dampferzeuger angeschlossen, in dem mit der Wärme der NO$_x$-Gase Dampf erzeugt wird. Außerdem kann die Wärme der NO$_x$-Gase auch zur Restgaserwärmung od. dgl. benutzt werden.

Nach Abkühlung der NO$_x$-Gase auf ein Temperaturniveau von etwa 200°C jedoch erfolgt die weitere Abkühlung lediglich mit Kühlwasser ohne weitere Nutzung der Prozeßwärme, die Restwärme der NO$_x$-Gase wird ungenutzt in ein Kühlsystem abgeführt. Für diese Abkühlung werden bei bekannten Verfahren entsprechend große Kühlwassermengen benötigt mit entsprechenden Auswirkungen auf die Betriebskosten oder es werden entsprechend große Wärmeaustauscher benötigt, wodurch die Investitionskosten vergrößert werden.

Demgegenüber besteht die Aufgabe der Erfindung darin, bei derartigen Verfahren die im Prozeß erzeugte Wärmeenergie besser auszunutzen, wobei insbesondere die Wärmeenergie der NO$_x$-Gase auf niedrigerem Temperaturniveau ausgenutzt werden soll.

Diese Aufgabe wird mit einem Verfahren der eingangs bezeichneten Art erfindungsgemäß dadurch gelöst, daß in einem separaten Kreisprozeß flüssiges NH$_3$ mittels der Prozeßwärme der erzeugten NO$_x$-Gase verdampft und überhitzt wird, daß dann das überhitzte NH$_3$ in einer Turbine energieerzeugend entspannt wird und daß anschließend das flüssige NH$_3$ auf einen höheren Druck gebracht und nachfolgend wiederum verdampft und überhitzt wird.

Mit diesem Verfahren ist es möglich, die im Salpetersäure-Prozeß vorhandene Wärmeenergie wesentlich besser auszunutzen, indem auch die Wärmeenergie der NO$_x$-Gase auf niedrigerem Temperaturniveau noch sinnvoll ausgenutzt werden kann. Diese Energieausnutzung ist durch die Anwendung von Ammoniak als Energieträger in einem geschlossenen Kreisprozeß möglich, da Ammoniak aufgrund seines Verdampfungsverhaltens schon bei relativ niedrigen Temperaturen unter Druck verdampft und überhitzt werden kann. Bei der Verwendung des üblichen Energieträgers Wasser für Wärmekraftprozesse wären dagegen höhere Temperaturen notwendig. Die erzeugte Energie kann direkt im Prozeß verbraucht werden, wobei beispielsweise eine Kopplung der Gegendruckturbine mit anderen Aggregaten möglich ist, so kann beispielsweise ein Generator angetrieben werden.

In besonders vorteilhafter Ausgestaltung der Erfindung ist vorgesehen, daß das flüssige NH$_3$ isobar bei einem Druck von 20 bis 100 bar, insbesondere 80 bar, verdampft und überhitzt wird. Dieser Druckbereich hat sich als energetisch besonders günstig erwiesen.

In Abhängigkeit von dem gewählten Druck sieht die Erfindung vor, daß das NH$_3$ auf 130 bis 300°C, insbesondere 140 bis 180°C, überhitzt wird. Eine solche Überhitzung ist mittels der zur Verfügung stehenden Wärme der NO$_x$-Gase auf relativ niedrigem Temperaturniveau möglich, so daß deren Wärmeenergie weitgehend ausgenutzt werden kann.

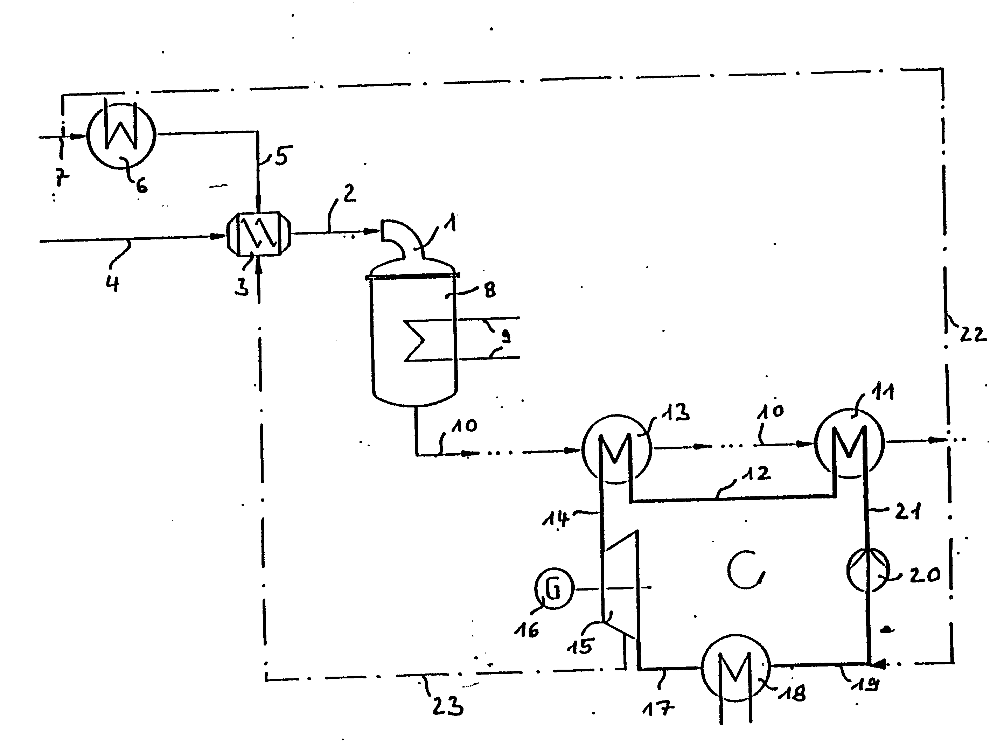

Die Erfindung ist nachstehend anhand der Zeichnung beispielsweise näher erläutert. Diese zeigt in der einzigen Figur ein Schaltbild einer Ausführungsform des erfindungsgemäßen Verfahrens.

Von einer Salpetersäure-Anlage ist in der Zeichnung im wesentlichen nur der Oxidationsteil dargestellt. Dieser weist einen Brenner 1 auf, in den ein Ammoniak-Luft-Gemisch durch eine Leitung 2 aus einem Mischer 3 geleitet wird. In den Mischer 3 sind eine Luftleitung 4, die von einer nicht dargestellten Luftquelle ausgeht, und eine Ammoniak-Leitung 5 geführt, in welche ein NH$_3$-Verdampfer zwischengeschaltet ist, dem über eine Leitung 7 kontinuierlich flüssiges NH$_3$ aus einem nicht dargestellten NH$_3$-Vorrat zugeleitet wird.

An den Brenner 1 ist direkt ein Wärmeaustauscher 8, insbesondere Verdampfer, angekoppelt, in welchem mittels der erzeugten NO$_x$-Gase ein durch Leitungen 9 strömendes Fluid, insbesondere zu verdampfendes Wasser, aufgeheizt wird. Am Austritt des Verdampfers 8 für die NO$_x$-Gase ist eine Leitung 10 angeschlossen, welche über verschiedenartige Wärmeaustauscher letztendlich zum nicht dargestellten Absorptionsturm führt.

Die in der Leitung 10 geführten NO$_x$-Gase dienen insbesondere zur Wärmeabgabe an einen Ammoniak-Kreisprozeß. Dazu ist ein geschlossener Ammoniak-Kreislauf vorgesehen: Ein NH$_3$-Ver-

dampfer 11 ist über eine Leitung 12 mit einem NH$_3$-Überhitzer 13 gekoppelt. Aus dem Überhitzer 13 austretendes, überhitztes NH$_3$ fließt über eine Leitung 14 in eine Turbine 15, die beispielsweise an einen Generator 16 angeschlossen sein kann. Von der Turbine 15 führt eine Leitung 17 zu einem Kondensator 18 und von dort eine Leitung 19 zu einer Pumpe 20, von welcher das verflüssigte NH$_3$ wieder auf einen erhöhten Druck gebracht und über eine Leitung 21 zurück in den Verdampfer 11 geführt wird. Eine nur strichpunktiert wiedergegebene Leitung 22 steht abzweigend von der Leitung 7 mit dem nicht dargestellten Ammoniak-Vorrat in Verbindung und mündet über entsprechende, nicht dargestellte Absperreinrichtungen in die Leitung 19 des Kreislaufes, so daß durch diese Leitung NH$_3$ in den Kreislauf einleitbar ist. Dieses NH$_3$ kann dann im Kreislauf verdampft, erhitzt und entspannt werden und nach der Entspannung ggf. über eine weitere, nur strichpunktiert angedeutete Leitung 23 in den Mischer 3 geführt werden, wobei die Leitung 23 über nicht dargestellte Absperreinrichtung vom Kreislauf getrennt werden kann, so daß der Ammoniak-Kreislauf dann geschlossen ist.

Wie bei bekannten Verfahren wird im Brenner 1 ein AmmoniakLuftgemisch zu NO$_x$-Gasen oxidiert, wobei die etwa 900°C heißen NO$_x$-Gase im Verdampfer 8 auf etwa 450°C abgekühlt werden. Die NO$_x$-Gase werden durch die Leitung 10 aus dem Verdampfer 8 abgeführt und über weitere, nicht dargestellte Wärmeaustauscher weiter abgekühlt, bevor sie in den NH$_3$-Überhitzer 13 gelangen. Dabei kann die Eintrittstemperatur der NO$_x$-Gase bei etwa 200 bis 250°C liegen, was zur Überhitzung des im geschlossenen Kreislauf befindlichen NH$_3$ auf 140 bis 180°C bei Drücken von 20 bis 100 bar ausreicht. Die NO$_x$-Gase werden dann im Verdampfer 11 weiter abgekühlt, in welchem das im Kreislauf befindliche NH$_3$ entsprechend verdampft wird, wobei diese Verdampfung gegenüber der Überhitzung entsprechend auf niedrigerem Temperaturniveau erfolgt. Auf diese Weise kann die Prozeßwärme der NO$_x$-Gase auf relativ niedrigem Temperaturniveau noch sinnvoll genutzt werden.

Im Ammoniak-Kreislauf wird flüssiges NH$_3$ im Verdampfer 11 zunächst verdampft und dann im Überhitzer 13 auf 140 bis 180°C erhitzt, um dann anschließend in der Turbine energieerzeugend entspannt zu werden. Dabei kann die erzeugte Energie beispielsweise an den Generator 16 abgegeben werden. Nach der Entspannung wird das NH$_3$ im Kondensator 18 kondensiert und anschließend durch die Pumpe 20 wieder auf einen erhöhten Druck gebracht, um dann im Verdampfer 11 wieder verdampft zu werden.

Natürlich ist die Erfindung nicht auf das in der Zeichnung dargestellte Ausführungsbeispiel beschränkt. Weitere Ausgestaltungen der Erfindung sind möglich, ohne den Grundgedanken zu verlassen. So kann die Energieabgabe der NO$_x$-Gase im Überhitzer und Verdampfer natürlich auch auf höherem Temperaturniveau erfolgen. Außerdem kann anstelle von NH$_3$ im Kreisprozeß auch ein anderes, ähnliche Verdampfungseigenschaften aufweisendes Medium eingesetzt werden und dgl. mehr.

**Ansprüche**

1. Verfahren zur Erzeugung mechanischer Energie bei der NH$_3$-Oxidation im HNO$_3$-Prozeß, bei dem NH$_3$ durch Verbrennung zu NO$_x$-Gasen umgesetzt wird,
dadurch gekennzeichnet,
daß in einem separaten Kreisprozeß flüssiges NH$_3$ mittels der Prozeßwärme der erzeugten NO$_x$-Gase verdampft und überhitzt wird, daß dann das überhitzte NH$_3$ in einer Turbine energieerzeugend entspannt wird und daß anschließend das flüssige NH$_3$ auf einen höhren Druck gebracht und nachfolgend wiederum verdampft und überhitzt wird.

2. Verfahren nach Anspruch 1,
dadurch gekennzeichnet,
daß das flüssige NH$_3$ isobar bei einem Druck von 20 bis 100 bar, insbesondere 80 bar, verdampft und überhitzt wird.

3. Verfahren nach Anspruch 1 oder 2,
dadurch gekennzeichnet,
daß das NH$_3$ auf 130 bis 300°C, insbesondere 140 bis 180°C, überhitzt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CHEMICAL ABSTRACTS Band 91, Nr. 4, 23. Juli 1979, Seite 138, Zusammenfassung Nr. 23035h, Columbus, Ohio, US; ALLEMANN et al.: "Dry/wet cooling towers with ammonia as intermediate heat exchange medium" & Energy Res. Abstr. 1979; Band 4, Nr. 1, Zusammenfassung Nr. 540 --- | 1 | C 01 B 21/26 |
| A | PATENT ABSTRACTS OF JAPAN Band 3, Nr. 118 (C-60), 4. Oktober 1979; & JP - A - 54 97604 (SHIN NIPPON SEITETSU K.K.) 08.01.1979 --- | 1 | |
| A | DE-C- 900 453 (BADISCHE ANILIN- & SODA-FABRIK AG) * Anspruch 1 * --- | 1 | |
| A | DE-C- 752 321 (I.G. FARBENINDUSTRIE AG) * Anspruch 1 * --- | 1 | RECHERCHIERTE SACHGEBIETE (Int. Cl.5) |
| A | DE-C- 648 294 (FRIEDRICH UHDE et al.) * Ansprüche 1,2 * --- | 1 | C 01 B 21/26 |
| A | DE-C- 622 874 (HARRY PAULING) * Anspruch 1 * ----- | 1 | |

Der vorliegende Recherchenbericht wurde für alle Patentansprüche erstellt

| Recherchenort | Abschlußdatum der Recherche | Prüfer |
|---|---|---|
| BERLIN | 03-05-1990 | CLEMENT J.P. |